# EUROPÄISCHE PATENTSCHRIFT

(11) **EP 1 370 382 B1**
(45) Veröffentlichungstag und Bekanntmachung des Hinweises auf die Patenterteilung: **23.04.2008**
(21) Anmeldenummer: 02714185.2
(22) Anmeldetag: 12.03.2002
(51) Int. Cl.: B23B 27/16, B23B 27/06, B23B 27/04

(54) **PROFIL-DREHWERKZEUG**
PROFILE TURNING TOOL
TOUR A PROFILE

(30) Priorität: 21.03.2001 DE 10113633
(43) Veröffentlichungstag der Anmeldung: 17.12.2003
(73) Patentinhaber: Jakob Lach GmbH & Co. KG, 63452 Hanau (DE)
(72) Erfinder: MAURER, Eugen, 61239 Ober-Mörlen (DE); LACH, Horst, 6450 Hanau 1 (DE)
(74) Vertreter: Jochem, Bernd
(86) Internationale Anmeldenummer: PCT/EP2002/002670
(87) Internationale Veröffentlichungsnummer: WO 2002/076660

(56) Entgegenhaltungen:
- EP-A- 0 150 901
- DE-A- 19 937 738
- FR-A- 2 626 204
- US-A- 3 268 977
- US-A- 3 705 447
- US-A- 4 001 925

## Beschreibung

Die Erfindung betrifft ein Profil-Drehwerkzeug zum Schruppen und Schlichten von Umfangs- und Planflächen, insbesondere an Werkstücken aus Leichtmetall, bestehend aus einem stabförmigen Halter mit einer Aufnahme für ein Schneidenteil mit einem gerundeten Schneidkopf, dessen aus einem Material wie Diamant oder kubischem Bornitrid bestehende Schneidkante sich über einen Umfangswinkel von mehr als 90° erstreckt, und einer in eine Längsnut im Halter eingreifenden und mittels einer in den Halter einschraubbaren Spannschraube das Schneidenteil am Halter festklemmenden Pratze, deren vorderes Ende als Spanbrecher ausgebildet ist (siehe z.B. FR-A-2626204).

Ein derartiges Drehwerkzeug ist in der DE 199 37 738 A1 beschrieben. Es dient u. a. zum Bearbeiten der Umfangs- und Planflächen von Leichtmetallfelgen in einem Arbeitsgang. Dabei treten beim Schruppen mit bis zu 5 mm Spantiefe und hohen Schnittgeschwindigkeiten am gerundeten Schneidkopf und Spanbrecher extreme Belastungen aus über 180° wechselnden Richtungen auf. Hartmetallwerkzeuge sind unter diesen Beanspruchungen nach der Bearbeitung von 200 Felgen verschlissen, d. h. zweimal pro Schicht müssen die Werkzeuge ausgewechselt werden. Werkzeuge mit einem Schneideinsatz aus polykristallinem Diamant oder Bornitrit haben lange Standzeiten, konnten aber zuvor nicht so hoch belastet werden, weil der geklemmte Schneideinsatz in Schwingungen geriet und brach.

Bei der in der DE 199 37 738 A1 beschriebenen Ausführung wird zwar bereits eine allseitig formschlüssige Festlegung des Schneideinsatzes und des Spanbrechers erreicht, aber der Aufbau ist aufwendig und voluminös, weil die. Aufnahme der auf die Pratze wirkenden Querkräfte an einer gegenüber dem Schneidkopf seitlich versetzten Spannschraube und einer noch weiter seitlich versetzten Führungsnut erfolgt. Dadurch ergibt sich auch ein relativ großer Abstand der Spannschraube und der Führungsflächen zum Schneidkopf und Spanbrecher und somit ein ungünstiges Hebelarmverhältnis an der Pratze und eine gewisse Weichheit der Einspannung.

Der Erfindung liegt deshalb die Aufgabe zugrunde, das bekannte Drehwerkzeug dahingehend zu verbessern, daß die Einspannung des Schneidenteils und des Spanbrechers einfacher und gleichzeitig fester und steifer ist.

Vorstehende Aufgabe wird erfindungsgemäß dadurch gelöst, daß sich die Mittellängsachse des Schneidkopfs in Längsrichtung durch die Nut erstreckt, deren Grundfläche im Längsschnitt eine konkave Form hat und ein Drehlager für die auf ihrer Unterseite im Eingriffsbereich konvex geformte, an den Seitenwänden der Nut geführte Pratze bildet,und sich die Spannschraube vor dem Zentrum der konvexen Wölbung mit Spiel durch ein Loch in der Pratze erstreckt.

Die Erfindung bietet den Vorteil, daß sich die Spannschraube und die seitlichen Führungsflächen der Pratze in kurzem Abstand unmittelbar hinter dem Schneidkopf befinden. Die Pratze kann wesentlich schmaler sein. Sie liegt großflächig am Halter an, wodurch Eigenschwingungen vorgebeugt wird, und bildet dennoch einen verschwenkbaren Hebel zur Übertragung der Spannkraft der Schraube nach vorn auf den Schneidkopf. Die Hebelarme sind kurz und stehen in einem wesentlich besseren Verhältnis als bei der bekannten Ausführung. Die zusammenwirkenden, gerundeten, vorzugsweise teilzylindrischen Flächen in der Nut im Halter und an der Pratze haben die doppelte Funktion, ein Schwenklager für die Pratze zu bilden und außerdem den bisher separaten axialen Anschlag für diese zu ersetzen.

In der bevorzugten praktischen Ausführung ist der in Längsrichtung des Halters gemessene Abstand zwischen der Mittelachse des Lochs und dem Zentrum der konvexen Wölbung größer als ein Drittel, vorzugsweise sogar größer als die Hälfte des Abstands zwischen der Mittelachse des Lochs und der Mitte der Klemmstelle zwischen der Pratze und dem Schneidenteil. Dadurch kann ein wesentlich größerer Teil der Spannkraft der Schraube als bisher als Klemmkraft auf das Schneidenteil aufgebracht werden. Damit die im seitlichen Schneidkantenbereich entstehenden Späne nicht gegen einen zwar zur Spitze hin schräg abfallenden, aber an den Seiten einen bisher im wesentlichen rechten Winkel mit der Oberseite des Schneidkopfs bildenden Spanbrecher stoßen, ist vorzugsweise das aus Hartmetall bestehende Ende der Pratze auf wenigstens einer Seitenfläche mit einer Spanleitmulde versehen.

In weiterer bevorzugter Ausgestaltung der Erfindung besteht das Schneidenteil nur aus dem Schneidkopf in Form einer Schneidplatte, die entweder kreisrund ist oder vorne und seitlich eine sich über mehr als 180° erstreckende, kreisbogenförmige Schneidkante und am hinteren Ende eine in der Draufsicht von der Kreisbogenform der Schneidkante abweichende Anlagefläche hat, durch die sie drehfest gehalten werden kann.

Für die Praxis wird eine Ausführung des erfindungsgemäßen Drehwerkzeugs bevorzugt, bei der die Schneidplatte eine Lage Hartschneidstoff, wie polykristalliner Diamant oder Bornitrid, auf einer Lage Hartmetall aufweist und konzentrisch zur kreisbogenförmigen Schneidkante aus der Lage Hartmetall ein Zentrierzapfen geformt ist, der in ein passendes Aufnahmeloch am vorderen Ende des Halters einsetzbar ist. Hier erfolgt eine Überleitung der auf die Schneidkante wirkende Axial- und Querkräfte auf den Halter bereits unmittelbar neben der Schneidkante. Im Hinblick auf die hier auftretenden Belastungen empfiehlt es sich, daß die Aufnahme für die Schneidplatte durch einen auf das vordere Ende des Halters aufgelöteten Einsatz aus Hartmetall gebildet ist, der mit dem Aufnahmeloch und gegebenenfalls einer mit der Anlagefläche zusammenwirkenden Abstützfläche versehen ist.

Nachstehend wird ein Ausführungsbeispiel der Erfindung anhand der beigefügten Zeichnung näher erläutert. Es zeigen:
- Fig. 1: eine perspektivische Ansicht eines Drehwerkzeugs gemäß der Erfindung;
- Fig. 2 bis 4: eine Seitenansicht des vorderen Bereichs in größerem Maßstab sowie eine Draufsicht und Vorderansicht von Drehwerkzeugen entsprechend Fig. 1;
- Fig. 5 und 6: eine Draufsicht und einen Längsschnitt des Halters der Drehwerkzeuge nach Fig. 1 - 4;
- Fig. 7 und 8: eine Seitenansicht und eine Draufsicht der Pratze mit bzw. ohne Spanbrechereinsatz des Drehwerkzeugs nach Fig. 2;
- Fig. 9: eine Draufsicht einer alternativ anwendbaren asymmetrischen Pratze mit Spanbrechereinsatz;
- Fig. 10: eine perspektivische Ansicht eines am vorderen Ende des Halters nach Fig. 5 und 6 aufzulötenden Hartmetalleinsatzes;
- Fig. 11 und 12: Seitenansicht und Draufsicht der bei dem Drehwerkzeug nach Fig. 1 durch eine Pratze nach Fig. 7 und 8 gegen den Hartmetalleinsatz nach Fig. 7 bis 9 angepressten und darin zentrierten Schneidplatte;
- Fig. 13 und 14: Seitenansicht und Draufsicht eines alternativ zur Ausführung nach Fig. 10 anwendbaren Hartmetalleinsatzes und
- Fig. 15 und 16: Seitenansicht und Draufsicht einer zusammen mit dem Hartmetalleinsatz nach Fig. 13 und 14 zum Einsatz kommenden Schneidplatte.

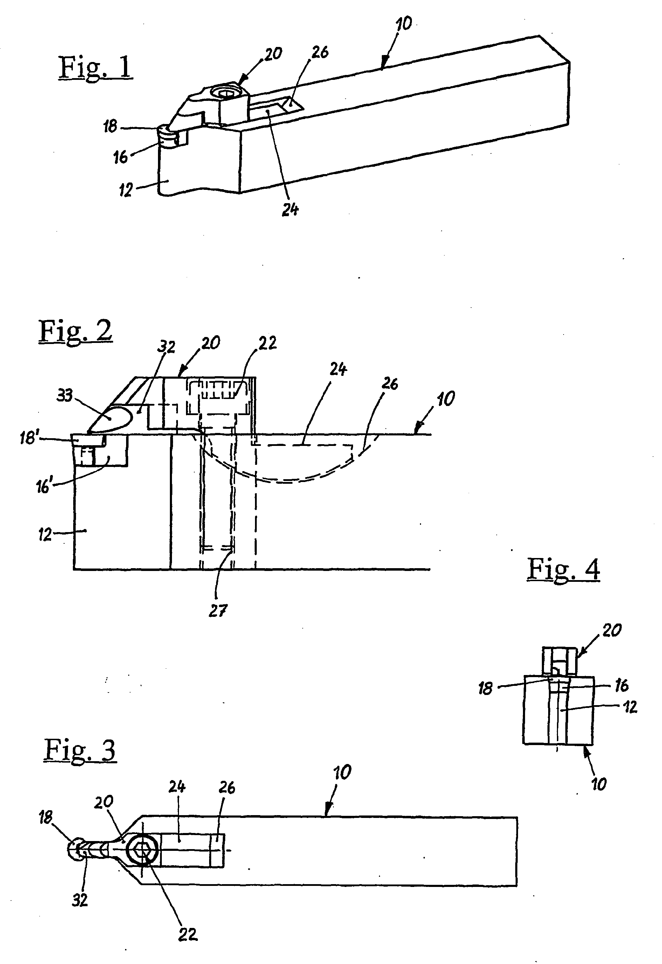

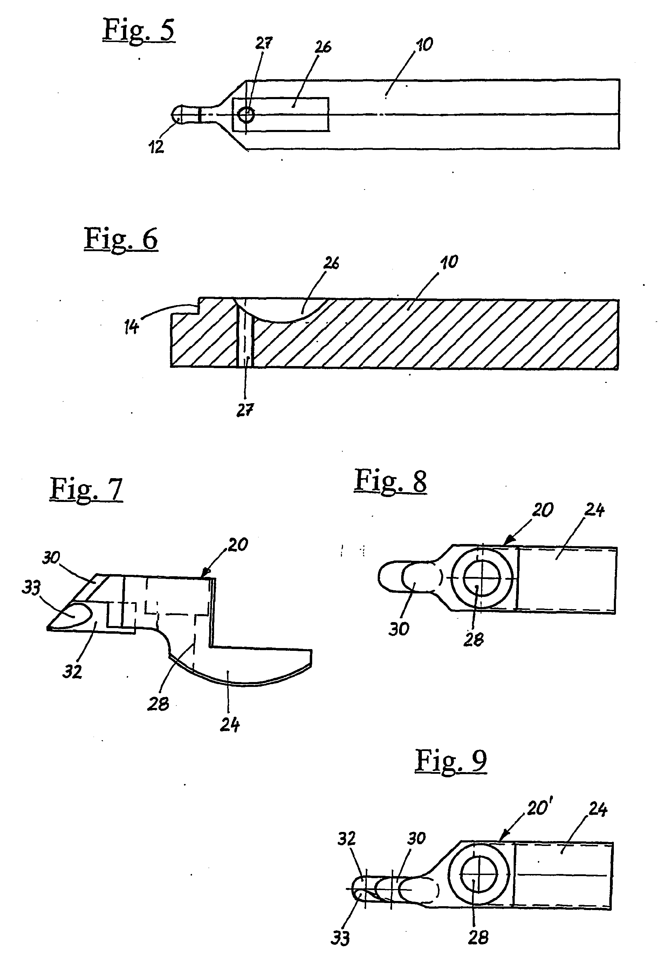

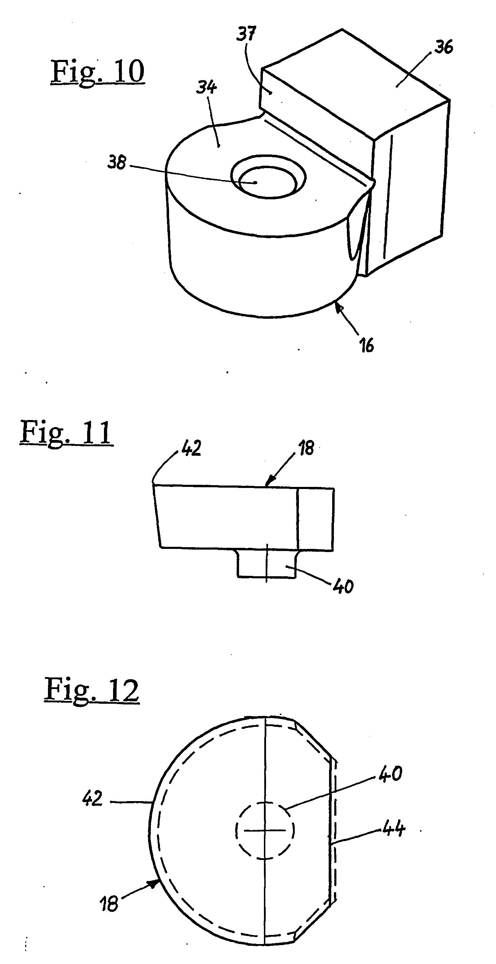

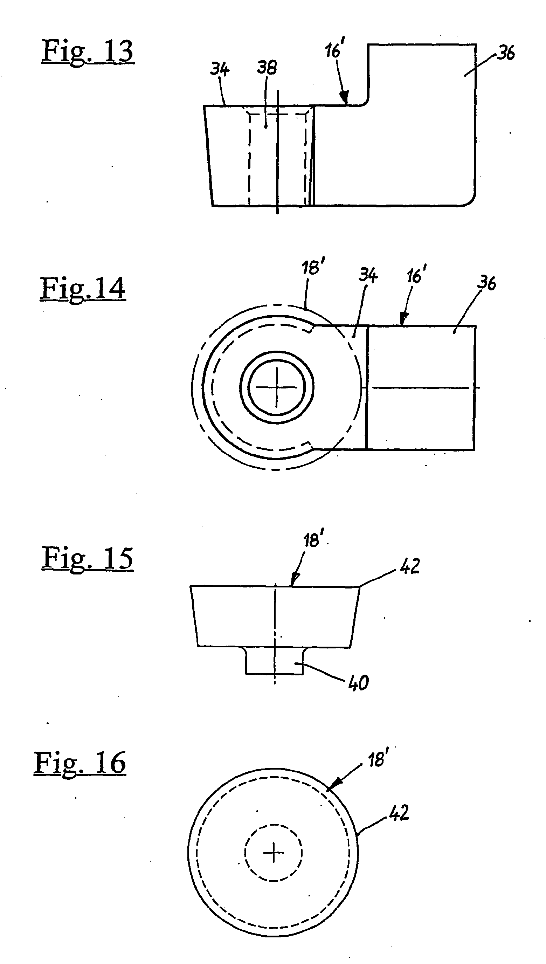

Die in Fig. 1 bis 4 dargestellten neuen Profil-Drehwerkzeuge bestehen jeweils aus einem länglichen Halter 10 mit rechtekkigem Querschnitt, der sich am vorderen Ende zu einer schmalen Zunge 12 verjüngt. Im Bereich dieser Zunge 12 ist der Halter 10 mit einer stufenförmigen Aussparung 14 gemäß Fig. 5 und 6 versehen, auf die der in Fig. 10 oder der in Fig. 13 und 14 gezeigte Hartmetalleinsatz 16 bzw. 16'aufgelötet ist. Auf diesen ist eine Schneidplatte 18 (Fig. 11 und 12) bzw. 18' (Fig. 15 und 16) aufgesetzt, die durch eine Pratze 20 geklemmt gehalten wird, die ihrerseits durch eine Spannschraube 22 mit dem Halter 10 verspannt ist. Wie in Fig. 1, 3 und 4 gezeigt, ist im Beispielsfall die Form und Anordnung der Teile symmetrisch zu einer senkrechten Mittellängsebene durch den Halter 10. Die Pratze 20 braucht bei dieser Anordnung nur wenig breiter zu sein als der Kopf der Spannschraube 22 und der Halter 10 wiederum nur so viel breiter, wie es für die Aufnahme der auf ihn wirkenden Belastungen erforderlich ist. Alternativ zeigt Fig. 9 in Draufsicht eine asymmetrisch Pratze 20' zur Verwendung bei einem Halter 10 mit in entsprechender Weise asymmetrisch angeordneter Zunge 12.

Eine Besonderheit des gezeigten Drehwerkzeugs besteht darin, daß die Pratze 20 mit ihrem sich von der Spannschraube 22 nach hinten erstreckenden Teil 24 in einer Nut 26 im Halter 10 sitzt, die gemäß Fig. 6 im Längsschnitt einen kreisbogenförmigen Grund hat. Die mit 27 bezeichnete Gewindebohrung für die Spannschraube 22 befindet sich am vorderen Ende der Nut 26. Die Breite des hinteren Teils 24 der Pratze 20 paßt zur Breite der Nut 26, so daß diese eine seitliche Führung für die Pratze 20 bietet. Vorzugsweise haben die Nut 26 und der hintere Teil 24 der Pratze 20 einen rechteckigen Querschnitt. Die aneinander anliegenden Seitenflächen der Nut 26 und der Pratze 20 könnten aber auch derart geneigt sein, daß sie vom Grund der Nut aus nach oben divergieren.

Die teilzylindrische konkave Form der Grundfläche der Nut 26 ergibt im Zusammenwirken mit der im Radius passenden, teilzylindrischen konvexen Form der unteren Fläche des hinteren Teils 24 der Pratze 20 ein Schwenklager für diese. Beim Anziehen der Spannschraube 22 ist sie um den Mittelpunkt der teilzylindrischen Flächen drehbar. Um die Verschwenkbarkeit nicht zu behindern, sitzt die Spannschraube 22 mit radialem Spiel in einer sie aufnehmenden, abgesetzten Durchgangsbohrung 28 in der Pratze 20. Im montierten Zustand nach Fig. 1 und 2 bildet die teilzylindrische Grundfläche der Nut 26 einen axialen Anschlag zur Aufnahme der auf die Pratze 20 wirkenden Axialkräfte. Die Querkräfte werden von den Seitenflächen der Nut 26 aufgenommen.

Um die äußeren Maße bzw. das Volumen des Drehwerkzeugs im vorderen Bereich möglichst klein zu halten, ist die Pratze 20 kurz hinter der Bohrung 28 so weit stufenförmig abgesetzt, daß der abgesetzte, hinterste Bereich im montierten Zustand gemäß Fig. 1 etwa mit der Oberkante der Nut 26 abschließt oder noch ein wenig niedriger ist, so daß der hinterste Bereich der Pratze 20, wie in Fig. 1 gezeigt, vollständig in der Nut 26 aufgenommen ist.

Vor der Bohrung 28 verjüngt sich die Pratze 20 bzw. 20' zu einer in der Breite dem vorderen Ende des Halters 10 entsprechenden, mittig angeordneten Zunge 30 bzw. asymmetrisch angeordneten Zunge 30'. Sie fällt am vordersten Ende von oben nach unten schräg ab. Das vorderste Ende der Zunge 30 bzw. 30' wird durch einen mit dem übrigen Teil der Pratze 20 bzw. 20' verlöteten Hartmetalleinsatz 32 gebildet, der während des Drehens als Spanbrecher wirkt. Die Neigung der Vorderkante des Hartmetalleinsatzes in seiner Längsmittelebene kann z. B. etwa 35° betragen. Auf der Unterseite der Pratze 20 bzw. 20' steht das untere Ende des Hartmetalleinsatzes 32 gegenüber der unteren Fläche des vorderen Bereichs des Hauptkörpers der Pratze 20 bzw. 20' gemäß Fig. 7 nach unten ein wenig vor, so daß im montierten Zustand nach Fig. 2 die über die Spannschraube 22 aufgebrachte Spannkraft am vorderen Ende der Pratze 20 bzw. 20' nur über die untere Fläche des Hartmetalleinsatzes 32 als Klemmkraft auf die Schneidplatte 18 bzw. 18' wirkt.

Alternativ kann der Hartmetalleinsatz 32 auch die Form eines runden Stabes haben, der sich über die gesamte Höhe des vorderen Endes der Pratze 20 bzw. 20' erstreckt und deren Vorderkante bildet.

Wegen der hohen Beanspruchung besteht nicht nur das vorderste Ende der Pratze 20 bzw. 20' aus einem Hartmetallteil 32, sondern auch der vorderste, die Schneidplatte 18 bzw. 18' tragende Teil 16 bzw. 16' des Halters 10. Der mit dem übrigen Teil des Halters 10 verlötete Hartmetalleinsatz 16 hat gemäß Fig. 10 einen vorderen, weitgehend runden Teil 34 und einen hinteren, höheren, quaderförmigen Teil 36. Der vordere Teil 34 ist im Durchmesser etwas kleiner als die im vorderen Bereich ebenfalls über mehr als 180° kreisrunde Schneidplatte 18 gemäß Fig. 11 und 12. Die Umfangswand des kreisrunden vorderen Bereichs 34 des Hartmetalleinsatzes 16 bildet einen sich von oben nach unten mit z. B. 5° Neigung verjüngenden Kegelstumpf, der jedoch hinter der Mitte mit einem Übergangsradius in den quaderförmigen hinteren Teil 36 des Hartmetalleinsatzes 16 übergeht.

Der gerundete vordere Teil 34 des Hartmetalleinsatzes 16 ist mit einer angesenkten Durchgangsbohrung 38 versehen, die eine Zentrierbohrung für die Aufnahme eines an der Unterseite der Schneidplatte 18 angeformten Zentrierzapfens 40 bildet. Der quaderförmige hintere Teil 36 des Hartmetalleinsatzes 16 ragt um die ohne den Zentrierzapfen 40 gemessene Dicke der Schneidplatte 18 nach oben über den vorderen Teil 34 hinaus, so daß eine ebene senkrechte Abstützfläche 37 gebildet wird. Zweckmäßigerweise sollte allerdings im montierten Zustand nach Fig. 1 die obere Fläche des hinteren Teils 36 des Hartmetalleinsatzes 16 auf einem geringfügig niedrigeren Niveau liegen als die obere Fläche der Schneidplatte 18, um sicherzustellen, daß die Pratze 20 nur auf die Schneidplatte 18 drückt.

Die Schneidplatte 18 besteht aus einer oberen Lage aus polykristallinem Diamant, Bornitrid oder einem anderen Hartstoff, der im Herstellungsverfahren einstückig mit einer unteren Lage aus Hartmetall verbunden worden ist. Das Hartmetall der unteren Lage ist dann soweit abgearbeitet worden, daß der Zentrierzapfen 40 entstand. Die vorne und seitlich kreisrunde Umfangswand mit einem Durchmesser von z. B. etwa 8 mm verjüngt sich von oben nach unten zu einer leicht konischen Kegelstumpffläche, die mit der Mittellängsachse des Zentrierzapfens 40 z. B. einen Winkel von etwa 8° bildet. Auf diese Weise ergibt sich an der oberen Umfangskante eine Schneidkante 42, die sich über mehr als 180° erstreckt. Etwa 1 mm hinter der Mitte geht der Kreisbogen dann auf beiden Seiten in Schrägflächen über, die z. B. unter 45° schräg zur senkrechten Mittellängsebene verlaufen. Etwa 2,25 mm hinter der Mitte endet dann die Schneidplatte 18 an einer sich in Querrichtung erstreckenden, senkrechten Anlagefläche 44, die im Zusammenwirken mit der über den vorderen Teil 34 überstehenden vorderen Abstützfläche 37 des hinteren Teils 36 des Hartmetalleinsatzes 16, an der sie zur Anlage kommt, eine Drehung der Schneidplatte 18 verhindert. Außerdem wird über die hintere Anlagefläche 44 die nicht über den nur etwa 1 mm hohen Zentrierzapfen 40 und die Reibung zwischen der Schneidplatte 18 und dem Hartmetalleinsatz 16 auf diesen übergeleitete Axialkraft abgestützt.

Es versteht sich, daß in Anpassung an besondere Anwendungen die Teile des vorstehend beschriebenen Drehwerkzeugs eine andere Form haben oder aus anderen als den genannten Materialien bestehen können. So ist z. B. ohne weiteres ersichtlich, daß an die Stelle der im Ausführungsbeispiel verhältnismäßig kleinen Schneidplatte 18 im Einzelfall eine wesentlich größere Schneidplatte, z. B. aus Keramik, treten kann, wobei der Querschnitt des vorderen Endes 12 des Halters 10 und eines gegebenenfalls dort angebrachten Einsatzes 16 sowie das vordere Ende der Pratze der Form der Schneidplatte 18 anzupassen wären.

Als weitere Alternative ist in Fig. 13 und 14 ein dem Hartmetalleinsatz 16 entsprechender Hartmetalleinsatz 16' dargestellt, bei dem der Abstand der Durchgangsbohrung 38 vom quaderförmigen hinteren Teil 36 so groß ist, daß auf den vorderen Teil 34 eine in Fig. 14 angedeutete und in Fig. 15 und 16 in Seitenansicht und Draufsicht dargestellte Schneidplatte 18' mit einer sich um den gesamten Umfang erstreckenden Schneidkante 42 aufgesetzt werden kann. In Fig. 2 ist ein mit einer derartigen Schneidplatte versehenes Drehwerkzeug gezeigt und zusätzlich als weitere bevorzugte Ausgestaltung eine als Spanleitstufe bezeichnete Mulde 33 in einer vorderen Seitenfläche des als Spanbrecher wirkenden Hartmetalleinsatzes 22 der Pratze 20bzw. 20'. Je nach Vorschubrichtung beim Drehen kann die Mulde, wie in Fig. 7 und 9 gezeigt, auf der linken Seite oder, wie in Fig. 3 und 4 gezeigt, auf der rechten Seite des Spanbrechereinsatzes 32 vorgesehen sein. Sie sorgt dafür, daß in dem seitlichen Bereich der Schneidkante 42 gebildete Späne nicht gegen eine im übrigen verhältnismäßig steil bis senkrecht auf der Spanfläche der Schneidplatte 18 bzw. 18' stehende Seitenwand des Spanbrechereinsatzes 32 auflaufen.

## Patentansprüche

1. Profil-Drehwerkzeug zum Schruppen und Schlichten von Umfangs- und Planflächen, insbesondere an Werkstücken aus Leichtmetall, bestehend aus einem stabförmigen Halter (10) mit einer Aufnahme (16) für ein Schneidenteil (18) mit einem gerundeten Schneidkopf, dessen aus einem Material wie Diamant oder kubischem Bornitrid bestehende Schneidkante (42) sich über einen Umfangswinkel von mehr als 90° erstreckt, und einer in eine Längsnut (26) im Halter (10) eingreifenden und mittels einer in den Halter (10) einschraubbaren Spannschraube (22) das Schneidenteil (18) am Halter (10) festklemmenden Pratze (20), deren vorderes Ende (32) als Spanbrecher ausgebildet ist, **dadurch gekennzeichnet, daß** sich die Mittellängsachse des Schneidkopfs (18) in Längsrichtung durch die Nut (26) erstreckt, deren Grundfläche im Längsschnitt eine konkave Form hat und ein Drehlager für die auf ihrer Unterseite im Eingriffsbereich konvex geformte, an den Seitenwänden der Nut (26) geführte Pratze (20) bildet,und sich die Spannschraube (22) vor dem Zentrum der konvexen Wölbung mit Spiel durch ein Loch (28) in der Pratze (20) erstreckt.

2. Drehwerkzeug nach Anspruch 1, **dadurch gekennzeichnet, daß** die konkave Grundfläche der Nut (26) und die darauf drehbar geführte, konvex gewölbte Fläche auf der Unterseite der Pratze (20) im Radius passende teilzylindrische Flächen sind.

3. Drehwerkzeug nach Anspruch 1 oder 2, **dadurch gekennzeichnet, daß** die Drehachse der Pratze (20) mit den Seitenwänden der Nut (26) einen rechten Winkel bildet.

4. Drehwerkzeug nach einem der Ansprüche 1 bis 3, **dadurch gekennzeichnet, daß** der in Längsrichtung des Halters (10) gemessene Abstand zwischen der Mittelachse des Lochs (28) und dem Zentrum der konvexen Wölbung größer als ein Drittel,vorzugsweise größer als die Hälfte des Abstands zwischen der Mittelachse des Lochs (28) und der Mitte der Klemmstelle zwischen der Pratze (20) und dem Schneidenteil (18) ist.

5. Drehwerkzeug nach einem der vorhergehenden Ansprüche, **dadurch gekennzeichnet, daß** ab einem bestimmten Abstand vom Loch (28) die Höhe der Pratze (20) hinter dem Loch (28) höchstens etwa so groß ist wie die Tiefe der sie aufnehmenden Nut (26) an derselben Stelle.

6. Drehwerkzeug nach einem der vorhergehenden Ansprüche, **dadurch gekennzeichnet, daß** das vordere Ende (32) der Pratze (20), das gegen das Schneidenteil (18) andrückbar ist, aus Hartmetall besteht und die Form eines Spanbrechers hat.

7. Drehwerkzeug nach Anspruch 6, **dadurch gekennzeichnet, daß** das aus Hartmetall bestehende vordere Ende (32) der Pratze (20) auf wenigstens einer Seitenfläche mit einer Spanleitmulde (33) versehen ist.

8. Drehwerkzeug nach einem der vorhergehenden Ansprüche, **dadurch gekennzeichnet, daß** das Schneidenteil (18, 18') nur aus dem Schneidkopf in Form einer Schneidplatte besteht, die kreisrund ist oder vorne und seitlich eine sich über mehr als 180° erstreckende kreisbogenförmige Schneidkante (42) und hinten eine in der Draufsicht von der Kreisbogenform der Schneidkante (42) abweichende Anlagefläche (44) hat.

9. Drehwerkzeug nach Anspruch 8, **dadurch gekennzeichnet, daß** die Schneidplatte (18, 18') eine Lage Hartschneidstoff, wie polykristalliner Diamant oder kubisches Bornitrit, auf einer Lage Hartmetall aufweist und konzentrisch zur kreisbogenförmigen Schneidkante (42) aus der Lage Hartmetall ein Zentrierzapfen (40) geformt ist, der in ein passendes Aufnahmeloch (38) am vorderen Ende (12, 16) des Halters (10) einsetzbar ist.

10. Drehwerkzeug nach Anspruch 9, **dadurch gekennzeichnet, daß** die Aufnahme für die Schneidplatte (18, 18') durch einen auf das vordere Ende (12, 14) des Halters (10) aufgelöteten Einsatz (16, 16') aus Hartmetall gebildet ist, der mit dem Aufnahmeloch (38) und gegebenenfalls einer mit der Anlagefläche (44) zusammenwirkenden Abstützfläche (37) versehen ist.

## Claims

1. A profiled turning tool for rough-turning and dressing circumferential and flat surfaces, in particular of workpieces made of light metals, consisting of a rod-shaped holder (10) with a receiver (16) for a cutting element (18) with a rounded cutting head, whose cutting edge (42) is made of a material such as diamonds or cubical boron nitride and extends over a circumferential angle of more than 90°, and of a claw (20), engaging a longitudinal groove (26) in the holder (10) and having a front end (32) in form of a chip breaker, which claw clamps the cutting element 18 to the holder (10), by means of a tightening srew (22) being screwed into the holder (10), **characterized in that** the center longitudinal axis of the cutting head (18) extends in the longitudinal direction through the groove (26), whose base has a concave form in longitudinal cross section and forms a pivot bearing for the claw (20), which is convexly shaped on its underside in the engagement area and is guided on the lateral walls of the groove (26), and that ahead of the center of the convexity the tightening screw (22) extends with play through a hole (28) in the claw (20).

2. The turning tool in accordance with claim 1, **characterized in that** the concave base of the groove (26) and the convexly arched surface on the underside of the claw (20) rotatably guided on it are partially cylindrical faces of matching radii.

3. The turning tool in accordance with claim 1 or 2, **characterized in that** the axis of rotation of the claw (20) forms a right angle with the lateral walls of the groove (26).

4. The turning tool in accordance with one of claims 1 to 3, **characterized in that** the distance between the center axis of the hole (28) and the center of the convex arching, measured in the longitudinal direction of the holder (10), is greater than one third, preferably greater than half the distance between the center axis of the hole (28) and the center of the clamping point between the claw (20) and the cutting element (18).

5. The turning tool in accordance with one of the preceding claims, **characterized in that** from a defined distance from the hole (28) on, the height of the claw (20) behind the hole (28) is at most as large as the depth of the groove (26) receiving it at the same location.

6. The turning tool in accordance with one of the preceding claims, **characterized in that** the front end (32) of the claw (20), which can be pressed against the cutting element (18), is made of hard metal (cemented carbides) and has the shape of a chip breaker.

7. The turning tool in accordance with claim 6, **characterized in that** the front end (32, made of hard metal, of the claw (20) is provided on at least one lateral face with a chip guidance depression (33).

8. The turning tool in accordance with one of the preceding claims, **characterized in that** the cutting element (18, 18') consists only of the cutting head in the form of a cutting plate which is circular, or has at the front and the sides a cutting face (42) in the shape of an arc of a circle extending over more than 180°, and at the rear has a contact face (44) which, in a view from above, differs from the shape in the arc of a circle of the cutting edge (42).

9. The turning tool in accordance with claim 8, **characterized in that** the cutting plate (18, 18') has a layer of a hard cutting material, such as a poly-crystalline diamond or cubical boron nitride, on a layer of hard metal, and that a centering pin (40) is shaped concentrically in relation to the cutting edge (42) in the form of an arc of a circle from the layer of hard metal, which can be inserted into a matching receiving hole (38) at the front end (12, 16) of the holder (10).

10. The turning tool in accordance with claim 9, **characterized in that** the receiver for the cutting plate (18, 18') is formed by an insert (16, 16') of hard metal soldered to the front end (12, 14) of the holder (10) and is provided with the receiving hole (38) and, if desired, with a support face (37) acting together with the contact face (44).

## Revendications

1. Outil de tour à profil pour dégrossir et dresser des surfaces périphériques et des surfaces planes, notamment des surfaces de pièces en métal léger, comprenant un support (10) en forme de barre munie d'un logement (16) pour une pièce de coupe (18) ayant une tête de coupe arrondie dont l'arête de coupe (42) en une matière telle que du diamant ou du nitrure de bore, cubique, s'étend sur un angle périphérique de plus de 90° et d'une griffe (20) pénétrant dans une rainure longitudinale (26) du support (10) en serrant la pièce de coupe (18) sur le support (10) à l'aide d'une vis (22) vissée dans le support (10), griffe dont l'extrémité avant (32) est en forme de brise-copeaux,
**caractérisé en ce que**
l'axe médian longitudinal de la tête de coupe (18) s'étend dans la direction longitudinale à travers la rainure (26) dont la surface du fond présente en coupe longitudinale une forme concave et constitue un palier de rotation pour la griffe (20) dont la face inférieure présente une forme convexe dans la région de prise, en étant guidée contre les parois latérales de la rainure (26) et devant le centre de la courbure convexe, la vis de serrage (22) traverse avec du jeu, un trou (28) dans la griffe (20).

2. Outil de tour selon la revendication 1,
**caractérisé en ce que**
la surface concave du fond de la rainure (26) et la surface bombée convexe de la face inférieure de la griffe (20), guidée en rotation sur la surface du fond, sont des surfaces en forme de parties de cylindre de rayon adapté.

3. Outil de tour selon la revendication 1 ou 2,
**caractérisé en ce que**
l'axe de rotation de la riffe (20) forme un angle droit avec les parois létales de la rainure (26).

4. Outil de tour selon l'une des revendications 1 à 3,
**caractérisé en ce que**
la distance entre l'axe central du trou (28) et le centre de la partie bombée convexe, mesurée dans la direction longitudinale du support (10), est supérieure à un tiers et de préférence supérieure à la moitié de la distance entre l'axe central du trou (28) et le milieu du point de serrage entre la griffe (20) et la pièce de coupe (18).

5. Outil de tour selon l'une des revendications précédentes,
**caractérisé en ce qu'**
à partir d'une certaine distance du trou (28), la hauteur de la griffe (20) derrière le trou (28) est au maximum sensiblement aussi grande que la profondeur de la rainure (26) qui reçoit la griffe à cet endroit.

6. Outil de tour selon l'une des revendications précédentes,
**caractérisé en ce que**
l'extrémité avant (32) de la griffe (20), qui s'applique contre la pièce de coupe (18), est en métal dur (carbures métalliques cimentés) et a la forme d'un brise-copeaux.

7. Outil de tour selon la revendication 6,
**caractérisé en ce que**
au moins sur une surface latérale, l'extrémité avant (32) en métal dur de la griffe (20) est munie d'une gorge de guidage de copeaux (33).

8. Outil de tour selon l'une des revendications précédentes,
**caractérisé en ce que**
l'outil de coupe (18, 18') se compose d'une tête de coupe en forme de plaquette de coupe, circulaire, ou ayant à l'avant et sur les côtés une arête de coupe (42) en forme d'arc de cercle s'étendant sur plus de 180° et à l'arrière une surface d'appui (44) qui, en vue de dessus, est différente de la forme d'arc de cercle de l'arête de coupe (42).

9. Outil de tour selon la revendication 8,
**caractérisé en ce que**
la plaquette de coupe (18, 18') comporte une couche d'un matériau de coupe dur tel que diamant poly-cristallin ou du nitrure de bore cubique sur une couche de métal dur et concentriquement à l'arête de coupe en forme d'arc de cercle (42) elle est en forme de téton de centrage (40) avec une couche de métal dur, ce téton de centrage se plaçant dans un orifice de réception (38) adapté à l'extrémité avant (12, 16) du support (10).

10. Outil de tour selon la revendication 9,
**caractérisé en ce que**
le logement de la plaquette de coupe (18, 18') est formé par un insert (16') en métal dur soudé sur l'extrémité avant (12, 14) du support (10), cet insert étant muni de l'orifice de réception (38) et le cas échéant d'une surface d'appui (37) coopérant avec la surface d'appui (44).
